# EUROPEAN PATENT SPECIFICATION

(11) **EP 0 625 664 B1**
(45) Date of publication and mention of the grant of the patent: **26.11.1997**
(21) Application number: 94850076.4
(22) Date of filing: 05.05.1994
(51) Int. Cl.: F16L 11/24

(54) **Hose, particularly a vehicle exhaust hose, and a method for its manufacture**
Schlauch, insbesondere ein Kraftfahrzeugabgasschlauch, und Verfahren zu seiner Herstellung
Tuyau flexible, en particulier une tuyauterie flexible d'échappement pour automobiles, et procédé pour sa fabrication

(30) Priority: 07.05.1993 SE 9301573
(43) Date of publication of application: 23.11.1994
(73) Proprietor: TRELLEBORG INDUSTRI AB, 231 81 Trelleborg (SE)
(72) Inventor: Lindström, Peter, S-231 65 Trelleborg (SE); Strid, Nils Inge, S-231 63 Trelleborg (SE)
(74) Representative: Lundin, Björn-Eric

(56) References cited:
- DE-A- 2 141 281
- GB-A- M00 694
- SE-A- 445 133

## Description

The present invention relates to a hose, and then particularly, but not exclusively, to a vehicle exhaust hose, comprising an inner thin, rubber-coated fabric and an outer helically wound reinforcement which is intended to maintain the original cross-sectional shape of the hose.

Hoses that are provided with an external reinforcement on a thin rubber-coated fabric are known to the art and are used mainly to conduct the waste exhaust gases of motor vehicles, primarily the exhaust gases of private cars and trucks or lorries, for instance in vehicle workshops and vehicle testing institutions. For use as a vehicle exhaust hose, there is required a thin hose which has a relatively large cross-sectional area so as to ensure that the hose will only suffer from the hot gases to the smallest possible extent, these gases typically having a temperature of up to about 180°C. A thin hose of large cross-sectional area has been found the best type of hose in this connection, because the hot exhaust gases are cooled rapidly by such a hose. The problem with hoses of this nature, however, is that they tend to be squeezed together or bent so as to prevent the passage of exhaust gases through the hose, or even to render such passage impossible. It is therefore necessary to provide the hose with some form of means which will maintain the intended cross-sectional shape of the hose as far as possible, even when the hose is bent (curved) or subjected to external mechanical pressure. In the case of commercially available exhaust hoses, this is achieved by means of an external helix which is normally comprised of nylon-type plastic material and which is more shape-stable than the rubber-coated fabric. Such a hose is disclosed in SE-A-445 133. The plastic helix is completely enclosed by a rubber layer, which forms a passageway in which the plastic helix is loosely inserted. The rubber is intended to enable the helix to be joined to the fabric and the outer rubber layer in the helix is thus vulcanized to the rubber-coated fabric. No other solution to the problem of providing a connection between the reinforcement, i.e. the plastic helix, and the thin rubber-coated fabric is available or has been proposed. One serious drawback with a hose of this construction, however, is that it is relatively expensive in manufacture, since manufacture of the hose requires many complicated manufacturing stages, among other things.

The object of the present invention is to provide a hose comprising an external reinforcement of the kind defined in the introduction but which can be manufactured at low costs and which can therefore be retailed at a much lower price. The inventive hose also has other advantages over those hoses of hitherto known constructions and including an external rubber-coated plastic helix, these advantages being made apparent in the following description.

Another object of the invention is to provide a method of manufacturing such a hose.

To these ends, the invention is characterized by the features and steps defined in the following method and apparatus Claims.

The invention will now be described in more detail with reference to preferred exemplifying embodiments thereof.

The inventive hose thus includes a helically wound reinforcement having an inner core made of a plastic material which has a predetermined, relatively high melting point, by which it shall be understood that the melting point of the plastic material will lie above the temperature to which the hose is heated in the vulcanizing process. The reinforcement includes outside the inner core at least one layer of a similar plastic material. The layer nearest the core is bonded adhesively thereto and possible further layers located outside the layer proximal to the core are bonded adhesively to one another in the same manner. By bonded adhesively is meant that the layers will not loosen from one another and from the core under normal conditions. Normally, it is necessary to effect an adhesive bond by bringing the materials together while in a molten state, while extruding the helix starting materials. The outermost layer is comprised of a plastic material which has at most an equally as high melting point as at least the nearest adjacent material layer, or the core when only one layer is provided. The contact region between the rubber-coated fabric and the plastic helix presents an adhesion facilitating structure with intimate contact between the rubber-coated fabric and the plastic helix and with a partially molten outer plastic layer. This shall be understood as a structure which is the result of an initial melting of the outer plastic layer during a rubber vulcanizing stage, at the same time as the plastic helix is also pressed hard against the rubber-coated fabric. After the vulcanization stage this combination of procedures or measures results in a surprisingly strong adhesion zone at the contact surface between helix and rubber-coated fabric. Although the chemical and physical reasons for this adhesion are still not fully understood, it is believed that both chemical and physical forces are involved.

The helically formed reinforcement will suitably have a generally round or generally crescent-shaped cross-section, although it will be understood that this is not a requirement of the invention. The plastic material from which the reinforcement is made is comprised conveniently of different nylon qualities, since nylon possesses those properties required of such a reinforcement, both with regard to such mechanical properties as mechanical strength and flexibility, and suitable thermal properties, for instance sufficiently high melting points, and are relatively temperature responsive in general application environments.

Thus, in the preferred simplest case, the helical reinforcement is comprised of an inner nylon core whose melting point is higher than the temperature of a rubber vulcanizing process. The core is embraced by a thin nylon layer whose melting point is lower than the temperature of the vulcanizing process.

The inventive hose also has other not unessential advantages over earlier known similar products, in addition to the cost advantages indicated above. For instance, the hose can be made more aesthetically attractive, since the plastic helix can be readily constructed in different, bright colours. The hose is also more durable and resistant to external wear and other influences than the earlier hoses, since the outer plastic reinforcement generates less friction than rubber against other material surfaces that may come in the vicinity of the hose during the handling and use thereof. Another important advantage afforded by the inventive hose in relation to known vehicle exhaust hoses is that the hose will not discolor the floor or other surfaces, for instance varnished surfaces, when coming into contact therewith as the hose is handled and used, since the plastic helix protects such surfaces against contact with the hose, which can cause blackening of the surface when the hose surface is a rubber surface.

When manufacturing the inventive hose, a rubber-coated fabric is first wound helically around a solid mandrel in a conventional manner, with the turns of the helix partially overlapping. Rod or coarse wire is then wound helically around the fabric winding at a predetermined pitch, i.e. at a predetermined distance between the turns. This rod has in advance been produced by co-extrusion of at least two different plastic materials, suitably in a molten state, such as to form an inner core and at least one thin layer surrounding the core. In this regard, at least the outer layer is produced from a material whose melting point is lower or the same as the melting point of the adjacent material. The rod or coarse wire of co-extruded plastic is tensioned after extrusion, so as to incorporate mechanical stresses in the material. The mandrel and the rubber-coated fabric and rod or wire helix supported by the mandrel are then heated to a temperature at which the rubber is vulcanized in the fabric coating and at which the outer plastic layer of the helix will begin to melt. The helix will then shrink so as to reduce its helical cross-sectional area, as a result of the thus elevated temperature and also partly as a result of the aforesaid stretch in the material. Together with the simultaneous vulcanization and initial melting of the outer plastic layer, there is obtained as a result of shrinkage of the helix a type of hot pressing effect in the contact region between plastic helix and rubber-coated fabric. This ensures intimate contact and cohesion between the plastic helix and the rubber-coated fabric. Upon completion of the vulcanization process, the thus produced and finished hose is removed from the mandrel.

The inventive hose is particularly suitable for use as an exhaust gas hose for motor vehicles, particularly private cars and trucks, said hose being particularly intended for this purpose.

## Claims

1. A hose, particularly a vehicle exhaust hose, comprising an inner, thin rubber-coated fabric and an outer helically-shaped reinforcement which functions to maintain the intended cross-sectional shape of the hose and which is adhered to the surface of the rubber-coated fabric, **characterized** in that the helically-shaped reinforcement includes a plastic inner core having a predetermined, relatively high melting point, and at least one core external layer which is made of a similar plastic material to the core; in that the layer which lies nearest the core on the outer surface thereof is adhered to said surface; in that any further layers that may be included are adhered to one another in a similar manner; in that the outer layer is comprised of a plastic material whose melting point is lower or the same as the melting point of at least the nearest adjacent layer or of the core, whichever is applicable; and in that the contact region between the rubber-coated fabric and the plastic helix has an adhesion facilitating structure with intimate contact between the plastic helix and the rubber-coated fabric and a partially melted outer plastic layer.

2. A hose according to Claim 1, **characterized** in that the helically-shaped reinforcement has a generally round or crescent-like cross-sectional shape.

3. A hose according to Claim 1 and 2, **characterized** in that the plastic material from which the helically-shaped reinforcement is made is comprised of different nylon qualities.

4. A hose according to Claims 1-3, **characterized** in that the helically-shaped reinforcement is comprised of an inner nylon core whose melting point is higher than the temperature of a rubber vulcanizing process, and an external thin nylon layer whose melting point lies beneath said vulcanization temperature.

5. A method for producing a hose comprising an inner rubber-coated fabric and an outer helically-shaped reinforcement which functions to maintain the intended cross-sectional shape of the hose and which adheres to the rubber-coated fabric, by helically winding rubber-coated fabric onto a mandrel in a known manner, with the turns of the helix partially overlapping one another; helically winding around the fabric helix at a predetermined pitch a rod which has been produced by extrusion followed by mechanical stretching and comprising at least two different plastic materials and including an inner core and at least one thin layer surrounding said core, of which at least the outer layer is comprised of a material whose melting point is not higher than the melting point of adjacent material; heating the mandrel and the helically wound rubber-coated fabric and plastic helix carried thereby to a temperature at which the rubber is vulcanized in the fabric coating and the plastic in the outer helix layer begins to melt, such that the plastic helix will shrink in conjunction with the vulcanizing process and the initial melting of the outer plastic layer and therewith provide intimate contact and adhesion between plastic helix and the rubber-coated fabric; and removing the thus formed hose from the mandrel.

6. The use of the hose according to Claims 1-4 as a motor vehicle exhaust hose.

## Patentansprüche

1. Schlauch, insbesondere Fahrzeugabgasschlauch, mit einem inneren dünnen kautschukbeschichteten Gewebe und einer äußeren spiralförmigen Verstärkung, die so funktioniert, daß sie die beabsichtigte Querschnittsform des Schlauches beibehält, und die an der Oberfläche des kautschukbeschichteten Gewebes haftet, **dadurch gekennzeichnet**, daß die spiralförmige Verstärkung einen Kunststoffinnenkern mit einem vorbestimmten relativ hohen Schmelzpunkt und wenigstens eine Kernaußenschicht hat, die aus einem ähnlichen Kunststoffmaterial wie der Kern besteht, daß die Schicht, welche dem Kern auf dessen Außenoberfläche am nächsten liegt, an dieser Oberfläche haftet, daß irgendwelche weiteren Schichten, die eingeschlossen sein können, aneinander in ähnlicher Weise haften, daß die Außenschicht aus einem Kunststoffmaterial besteht, dessen Schmelzpunkt geringer als oder gleich wie der Schmelzpunkt wenigstens der nächstbenachbarten Schicht oder des Kerns, was immer benachbart ist, ist und daß der Kontaktbereich zwischen dem kautschukbeschichteten Gewebe und der Kunststoffspirale eine haftungserleichternde Struktur mit innigem Kontakt zwischen der Kunststoffspirale und dem kautschukbeschichteten Gewebe und einer teilweise geschmolzenen äußeren Kunststoffschicht hat.

2. Schlauch nach Anspruch 1, dadurch gekennzeichnet, daß die spiralförmige Verstärkung eine allgemein runde oder halbmondförmige Querschnittsform hat.

3. Schlauch nach Anspruch 1 und 2, dadurch gekennzeichnet, daß das Kunststoffmaterial, aus welchem die spiralförmige Verstärkung besteht, unterschiedliche Nylonqualitäten umfaßt.

4. Schlauch nach den Ansprüchen 1 bis 3, dadurch gekennzeichnet, daß die spiralförmige Verstärkung einen inneren Nylonkern, dessen Schmelzpunkt höher als die Temperatur eines Kautschukvulkanisierverfahrens ist, und eine äußere dünne Nylonschicht, deren Schmelzpunkt unter der Vulkanisiertemperatur liegt, umfaßt.

5. Verfahren zur Herstellung eines Schlauches mit einem inneren kautschukbeschichteten Gewebe und einer äußeren spiralförmigen Verstärkung, die so funktioniert, daß sie die beabsichtigte Querschnittsform des Schlauches beibehält und an dem kautschukbeschichteten Gewebe haftet, durch spiralförmiges Aufwickeln von kautschukbeschichtetem Gewebe auf einem Dorn in einer bekannten Weise, wobei die Windungen der Spirale einander teilweise überlappen, spiralförmiges Aufwickeln eines Stabes mit einer vorbestimmten Steigung um die Gewebespirale, wobei dieser Stab durch Extrudieren und anschließendes mechanisches Strecken erzeugt wurde und wenigstens zwei unterschiedliche Kunststoffmaterialen umfaßt und einen inneren Kern und wenigstens eine dünne den Kern umgebende Schicht einschließt, von denen wenigstens die äußere Schicht aus einem Material besteht, dessen Schmelzpunkt nicht höher als der Schmelzpunkt des benachbarten Materials ist, Erhitzen des Dornes und des spiralförmig aufgewickelten kautschukbeschichteten Gewebes und der Kunststoffspirale, die von ihm getragen werden, auf eine Temperatur, bei welcher der Kautschuk im Gewebeüberzug vulkanisiert wird und der Kunststoff in der äußeren Spiralschicht zu schmelzen beginnt, so daß die Kunststoffspirale in Verbindung mit dem Vulkanisierverfahren und dem Anschmelzen der äußeren Kunststoffschicht schrumpft und damit einen innigen Kontakt und ein Anhaften zwischen der Kunststoffspirale und dem kautschukbeschichteten Gewebe ergibt, und Entfernen des so gebildeten Schlauches von dem Dorn.

6. Verwendung des Schlauches nach den Ansprüchen 1 bis 4 als Motorfahrzeugabgasschlauch.

## Revendications

1. Tuyau flexible, en particulier tuyau flexible d'échappement pour véhicule, comprenant un produit textile mince interne, revêtu de caoutchouc, et un renforcement externe en forme d'hélice qui fonctionne pour maintenir la forme en section transversale recherchée du tuyau flexible et qui est amené à adhérer à la surface du produit textile revêtu de caoutchouc, caractérisé en ce que le renforcement en forme d'hélice comporte une âme interne en matière plastique ayant un point de fusion prédéterminé, relativement élevé, et au moins une couche externe à l'âme qui est faite en une matière plastique semblable à l'âme, en ce que la couche qui se trouve la plus proche de l'âme sur sa surface externe est amenée à adhérer à cette surface, en ce que d'autres couches quelconques qui peuvent être incluses sont amenées à adhérer l'une à l'autre d'une manière semblable, en ce que la couche externe est constituée de matière plastique dont le point de fusion est inférieur ou identique au point de fusion d'au moins la couche adjacente la plus proche ou de l'âme, quel que soit le cas applicable, et en ce que la région de contact entre le produit textile revêtu de caoutchouc et l'hélice en matière plastique a une structure facilitant l'adhésion avec un contact intime entre l'hélice en matière plastique et le produit textile revêtu de caoutchouc et une couche de matière plastique externe partiellement fondue.

2. Tuyau flexible suivant la revendication 1, caractérisé en ce que le renforcement en forme d'hélice présente une forme en section transversale généralement ronde ou de type lunule.

3. Tuyau flexible suivant l'une des revendications 1 et 2, caractérisé en ce que la matière plastique à partir de laquelle le renforcement en forme d'hélice est réalisé est constituée de différentes qualités de Nylon.

4. Tuyau flexible suivant l'une des revendications 1 à 3, caractérisé en ce que le renforcement en forme d'hélice est constitué d'une âme interne en Nylon dont le point de fusion est supérieur à la température d'un processus de vulcanisation de caoutchouc et d'une couche de Nylon mince externe dont le point de fusion est situé en dessous de ladite température de vulcanisation.

5. Procédé de production d'un tuyau flexible comprenant un produit textile interne revêtu de caoutchouc et un renforcement externe en forme d'hélice qui fonctionne pour maintenir la forme en section transversale recherchée du tuyau flexible et qui adhère au produit textile revêtu de caoutchouc, par enroulement en hélice du produit textile revêtu de caoutchouc sur un mandrin, d'une manière connue, avec les spires de l'hélice qui se recouvrent partiellement l'une l'autre, par enroulement en hélice autour de l'hélice de produit textile, à un pas prédéterminé, d'une tige qui a été produite par extrusion suivie d'une tension mécanique et comprenant au moins deux matières plastiques différentes et comportant une âme interne et au moins une couche mince entourant l'âme, au moins la couche externe étant constituée d'une matière dont le point de fusion n'est pas supérieur au point de fusion de la matière adjacente, par chauffage du mandrin et du produit textile revêtu de caoutchouc, enroulé en hélice, et de l'hélice de matière plastique portée par ceux-ci à une température à laquelle le caoutchouc est vulcanisé dans le revêtement du produit textile et la matière plastique dans la couche externe de l'hélice commence à fondre au point que l'hélice en matière plastique se contracte conjointement au processus de vulcanisation et à la fusion initiale de la couche en matière plastique externe, en procurant ainsi un contact intime et une adhésion entre l'hélice en matière plastique et le produit textile revêtu de caoutchouc, et par enlèvement du tuyau flexible ainsi formé à partir du mandrin.

6. Utilisation du tuyau flexible suivant l'une des revendications 1 à 4, comme tuyau flexible d'échappement pour véhicule à moteur.
